# EUROPEAN PATENT APPLICATION

(11) **EP 1 832 180 A1**
(43) Date of publication of application: **12.09.2007**
(21) Application number: 06110930.2
(22) Date of filing: 10.03.2006
(51) Int. Cl.: A23L 1/212, A23L 1/187, A23C 9/00

(54) **Composite dessert product comprising a non-acidic dairy component, and the preparation thereof**

(71) Applicant: Campina Nederland Holding B.V., 5301 LB Zaltbommel (NL)
(72) Inventor: Navarro Y Koren, Peter Antonio, 6716 RC, Ede (NL); Van de Ven, Martinus Johannes Maria, 6671 GK, Zetten (NL)
(74) Representative: van Westenbrugge, Andries

(57) **Abstract**

The invention pertains to a composite food product, preferably a composite dessert product, comprising at least a non-acidic dairy phase and an acidic food phase in contact therewith, wherein said acidic food phase exhibits a combination of pH and titratable acidity (TTA) below the line TTA = 30 * pH - 55, in which the pH is between 2.5 and 5. It is observed that the perception of a sandy and grainy layer is reduced within acceptable levels by combining a non-acidic dairy component with an acidic food component, wherein the acidic food component, if necessary after pre-treatment, exhibits a certain combination of pH and titratable acidity (TTA). The acidic food phase preferably contains yoghurt and/or fruit sauce, as these are often applied in desserts, the most favoured embodiment.

## Description

### FIELD OF THE INVENTION

The invention pertains to a composite food product, in particular a dessert product, comprising at least an acidic food phase and a non-acidic dairy phase in contact therewith, and to the preparation of such a composite food product.

### BACKGROUND OF THE INVENTION

In food industry there is a continuous demand from consumers for combinations of food ingredients having diverse visual properties and taste perception together in a single compartment packaging. This forces industry to combine different food compositions with one another, wherein each phase keeps its own characteristic properties and wherein the total perception of the product is appreciated. One of the conditions is that the various components should be stable during storage when in contact with one another. Over the years it has resulted in various combinations of existing dessert components to form new dessert applications, such as bilayer food systems comprising a dairy layer deposited on top of and in direct contact with another layer.

Such products are traditionally prepared in the kitchen, but are often difficult to produce on an industrial scale, especially if stability and taste perception are to be guaranteed over longer time scales. At the interface migration of water and solutes, such as colouring agents and flavourants, occurs. The effect of migration is also visible if one of the components is acidic and is in direct contact with a non-acidic dairy phase. In these cases, the appearance of a skin layer has been reported in F. Warin et al. "Formation of a protein aggregate layer at a milk/acidified gel interface" Int. Dairy Journal 8 (1998) pp. 801 - 806. This skin layer provides the product with a grainy dairy layer, in the article described as being "sandy", which layer is unattractive from a consumer's perspective.

Supposedly, the grainy skin layer formed on the interface is to be attributed to the acidification of milk due to the migration of acid from the acidic food phase, such as a fruit phase, towards the dairy phase. In the model study by Warin et al. a grainy layer systematically appeared in the region of milk where the pH was below 4.9, close to the gelation pH 4.7 - 4.8 of milk, where milk protein particles aggregate at room temperature to form a gel network. The layer could thus be described as a gelation layer.

Although food combinations of non-acidic dairy phase with an acidic food phase in contact therewith, such as pudding with fruit sauce, are readily available in the market, these combinations lack attractive appearance. The grainy mouthfeel of this layer is often masked by solid-like foodstuffs like fruit pieces. Commercially available fruit sauces containing real fruit pieces exhibit a pH below the milk gelation point, and moreover, have great ability to act as a proton donor, characterised by a titratable acidity starting from 65 °N. Therefore, despite the presence of fruit pieces an unpleasant grainy layer at the interface develops and restricts the selection of components. The awareness of this problem is for instance illustrated by R. Valet "Zur Herstellung von Fruchtzubereitungen und deren Anwendung in Milchprodukten" Die Industrielle Obst- une Gemüseverwertung, vol. 67 (1982), 507 - 515, in particular page 514 therein.

Hence, there is a need for combinations of non-acidic dairy components with acidic food components, wherein the combination has an improved visual appearance and taste perception and is not troubled by the unwanted interaction of the individual components such as formation of an unpleasant grainy layer at the interface, resulting e.g. in a sandy taste.

### DESCRIPTION OF THE INVENTION

It is an object of the invention to provide a composite food product comprising a non-acidic dairy component and an acidic food phase in contact therewith, wherein a grainy layer at the interface in-between is reduced or even absent, meaning not perceived as disturbed, after storage for one week at 7 °C, preferably after two weeks at 7 °C.

It is now found that the appearance of a grainy, sandy taste in such a composite food product can be minimised by taking away the driving force behind acid migration. It is observed that the perception of a sandy and grainy layer can be reduced within acceptable levels by combining a non-acidic dairy component with an acidic food component, wherein the acidic food component, if necessary after pre-treatment, exhibits a combination of pH and titratable acidity (TTA) below the line TTA = 30* pH - 55. It is demonstrated in the attached examples that at these conditions a composite food product may be prepared which has acceptable sensoric rating according to a test panel, and a weak interfacial layer, characterised in terms of peak force.

The present invention thus relates to a composite food product comprising at least a non-acidic dairy phase and an acidic food phase in contact therewith, wherein the acidic food phase exhibits a combination of pH and titratable acidity below the line TTA = 30 * pH - 55, and in which the pH is between 2.5 and 5, preferably pH 3.5 - 4.6. The pH boundary is given by the choice of the acidic food phase, and will be addressed further below.

In the context of the invention, pH and titratable acidity, and any other physical parameter mentioned herein, are determined in the bulk of the phase, unless specified otherwise. These parameters are measurable at any point after preparation, during storage for 7 days. The bulk phase is of more or less constant composition, not significantly affected by migration of one or more components, especially not acid migration, to and from another phase, at least not during this time period.

A composite food product according to the invention is spoonable or pourable (at consumption temperature), and incorporates combinations of foodstuffs in a single compartment packaging, wherein at least two distinct domains are in contact with one another. "Distinct" means that these domains should be large enough for a consumer to appreciate the different foodstuffs visually and/or taste-wise, typically a volume of at least 1 ml. In a preferred embodiment the composite food product is a composite dessert product, i.e. being recognised by a consumer as a dessert. The composite food product can comprise a collection of small domains of one food component dispersed in a continuous phase of another food component, such as blurred systems in which the contact layers are elongated and very thin, e.g. 1 mm, and in which the undesired effect of a grainy layer formed in the non-acidic dairy phase in direct contact with the acidic food phase would be most dramatic. The composite food product is thus not to be mistaken with an emulsion-type of food, although a domain could very well be an emulsion in itself. In a preferred embodiment the composite food product is a bilayer or multilayer food system, wherein the non-acidic diary phase and the acidic food phase form layers next to one another, each layer having a thickness of at least 1 mm. These layers could be aligned horizontally, vertically or swirled inside the package. There is no preference to which phase forms the outer or top layer, or whether one of more phases form a continuous layer.

Herebelow, all domains containing the same ingredients and amounts thereof in the composite food product are referred to as a single "phase". A single phase could thus comprise a collection of separate domains, for instance dispersed in another (continuous) phase. As aforementioned, the composite food product comprises at least a non-acidic dairy phase and an acidic food phase in contact with one another.

A "dairy phase" in the context of the invention is predominant in milk-based ingredients, i.e. containing for at least 50 wt%, preferably for at least 60 wt%, more preferably for at least 75 wt% of ingredients originating from milk, such as milk (powder), caseinate and whey protein concentrate. The problem of gelation upon contact with an acidic food phase especially occurs in a casein-containing dairy phase, where acidification results in the formation of a casein gel,

A "non-acidic dairy phase" is understood to be a dairy phase having a pH greater than the gelation point of milk proteins, preferably a pH greater than 5.5, more preferably pH 6 - 8. The non-acidic dairy phase can be pourable or spoonable at a temperature of 7 °C. The effect of a grainy layer in the non-acidic dairy phase in contact with the acidic food phase is disturbing in e.g. both pudding and custard or the Dutch equivalent "vla". However, the benefits of the invention are of lesser importance in frozen or baked dairy applications, such as ice cream and baked custard, because the taste perception of the sandy layer is not observed in such a semi-solid or solid product. These frozen or baked dairy applications are not the preferred uses of the invention. Typical examples of a non-acidic dairy phase are vla, custard, pudding, bavarois, creme brulée, cream.

In contrast, an "acidic food phase" in the context of the invention means a phase having a pH close to or lower than the gelation point of milk proteins, i.e. less than 5. Food regulations nowadays require that foods preserved by acidity have a pH of 4.6 or less. At these levels production of deadly toxins by organisms causing botulism are inhibited. Above pH 4.6, the acidic food phase would be addressed as a low-acid foodstuff. Based on food regulations, more favourable acidic food ingredients in the context of the invention are acidic foodstuffs which are classified as being high acid foodstuffs (pH < 3.7) or acid or medium-acid foodstuffs (3.7 < pH < 4.6). When an acidic food phase is in direct contact with the aforementioned non-acidic dairy phase containing milk proteins, acid migration would locally initiate gel formation in the outermost layer of the non-acidic dairy phase.

Secondly, the acidic food phase is characterised by having a titratable acidity appreciated as being low, especially when taking into account the pH of the acidic food phase. The titratable acidity corresponds to the buffering capactity of the foodstuff, and is a measure for the amount of equivalent base needed to change the pH of the product to a certain value. While the concept of titratable acidity is well-known to those in the art, the preferred test for measuring titratable acidity is the standard method of titration of citric acid with sodium hydroxide, as described in the Official Methods of Analysis (1999) 16th edition, 5th reversion, AOAC International, Gaithersburg, MD, method 942.15. In the field it is determined by titrating 100 ml sample with 0.1 M NaOH using phenolphtaleïn as indicator (end pH 8.4). The titratable acidity (TTA) of the continuous phase then corresponds to the volume of NaOH needed to reach the end point, expressed in terms of "°N". In order to arrive at a uniform value for the titratable acidity, the acidic food phase may first be subjected to stirring, which does not affect the size of solid fruit pieces optionally present therein. Also, if the acidic phase contains acids incapsulated in particles, which acids are released during consumption (due to mechanical shear, enzymatic action), these incapsulated acids will not contribute in the TTA analysis.

In a preferred embodiment the acidic food phase has a maximum titratable acidity on the line TTA = 30 * pH - 70. Most preferably, the acidic food phase is characterised as being an acid or medium-acid foodstuff, thus having a pH in the range of 3.7 - 4.6. More in particular, the acidic food phase has a titratable acidity of less than 50 °N, preferably less than 40 °N. Preferably the titratable acidity is higher than 1 °N, the theoretical lower limit given by the degree of neutralisation of a strong acid solution, such as HCl solution. However, in practice the titratable acidity of an acidic foodstuff suitable in the context of the invention is preferably higher than 20 °N.

The acidic food phase can be any acidic food component, at the condition that pH and titratable acidity are within the desired range. The acidic food phase preferably contains yoghurt and/or fruit sauce, as these foodstuffs are often applied in desserts, the most favoured embodiment of the invention. The acidic food phase may for instance be a product containing a mildly fermented thermised and/or diluted yoghurt. In a preferred embodiment the acidic food phase comprises a sauce containing fruit or pieces thereof. Like the non-acidic dairy phase, the acidic food phase is preferably a pourable or spoonable phase having a viscosity of at least 25 TA ("Texture Analyser") at 7 °C. Below 25 TA one is generally unable to fill a multicomponent system industrially. The acidic food phase may comprise solid or semi-solid food pieces such as fruit pieces. The viscosity in terms of TA units can be determined using a Texture Analyser, in more detail described further below.

Preferably, none of the acidic food phase and the non-acidic dairy phase is notably gelled, as the problem of a gelation layer at the interface between the phases is of minor importance, if at all noticeable.

In general, the composite food product of the present invention is characterised by having an interface between both phases which is, if noticed at all, appreciated by consumers as being soft. For consumer's perception of a good composite product, the gel strength, i.e. the firmness of the outer layer of the non-acidic dairy phase in contact with the acidic food phase, is an important parameter; the layer thickness only plays a minor role in the perception of the composite product: a thin, firm grainy interfacial layer is more noticeable than a thick soft layer. Where mention is made of an "interfacial layer" in context of the invention, it is meant a part or layer of the non-acidic dairy phase in contact with the acidic food phase, which part or layer differs from the bulk of the non-acidic dairy phase, because it is more firm and/or has a particulated, grainy or sandy nature sensible to the average consumer.

In terms of texture properties, the gel strength of the interface layer is commonly characterised by texture analysis. Here below, a test is given which provides the skilled person with a tool involving conventional measuring techniques for determining whether a composite food product falls within the scope of the invention. Thereto:
- a sample of the composite product is provided in such a way that the non-acidic dairy phase forms the bottom layer, wherein the top acidic layer is removed after sufficient storage time at 7 °C, thus leaving the outer layer of the non-acidic dairy phase exposed. To avoid boundary effects, the sample should be filled in a cup having an inner diameter of at least about 90 mm. A Mona pudding cup is suitable for this purpose, being a slightly conical cup with an upper diameter of e.g. 112 mm and a lower diameter of e.g. 90 mm, the sides of the cup making an angle of about 15°;
- the sample is then subjected to texture analysis, for instance using a Stable Microsystems TA-XT2i Texture Analyser (Stable Micro Systems, Surrey, UK) with the following settings:
   ■ "measure force in compression";
   ■ automatic trigger at 5 g force;
   ■ body geometry: 38 mm diameter 40 mm high plastic cylinder;
   ■ test speed 0.5 mm/s, and pre- and post-test speed 2.0 mm/s;
   ■ penetration distance 30 mm; and
   ■ sample temperature 7 °C;
   The force F is determined at the maximum value.

The force - penetration curve can be normalised by dividing the force measured at a certain distance in the sample by the force measured at the same distance when the non-acidic dairy phase would not be in contact with an acidic food phase, thereby applying the same measuring conditions. In other words, normalised force is the actual force relative to the force in absence of contact with an acidified phase. With the normalised force - penetration curve a skilled person can directly and unambiguously determine the firmness of the outer layer of the non-acidic dairy phase in contact with the acidic food phase, in principle independent of the above-given test and conditions applied therein. The texture of the food product can also be expressed in terms of the peak ratio. Herein, the peak ratio is calculated and defined as the maximum force of the product containing both phases divided by the maximum force of the non-acidic phase.

The composite food product according to the invention has an interface between said non-acidic dairy phases and said acidic food phase exhibiting a maximum in normalised force of less than 1.4, and a sensible gelled layer at the interface of less than 5 mm thickness. At peak ratios of 1.3 - 1.4, such a gelled layer is clearly visible in a composite food product. However, in case of these thin layers, a fruit-containing product may still be appreciated as acceptable from a consumer's point of view, because the firmness of the small interface layer may advantageously be mistaken for fruit pieces. This is especially the case where the acidic food phase is mildly acidic, having a pH of 4 or higher. These peak ratios are still in contrast with values reported in the examples attached for composite food products containing a non-acidic dairy phase and an acidic food phase in contact therewith, wherein the acidic food phase does not satisfy the pH and titratable acidity criteria set out above.

However, in a preferred embodiment the composite food product has an interface exhibiting a maximum in normalised force or peak ratio of less than 1.3, preferably even less than 1.25. Such a food product lacks a visually present gelled layer at the interface. As a comparison, a composite food product in which the interface layer is virtually and sensibly absent, would have a normalised force of about 1.

In order to determine the viscosity of a food phase in terms of TA units, the Texture Analyser (Stable microSystems TA-XT2i) described above in relation with the peak ratio may be applied, except for different settings:
■ measure force in gram at 18 mm penetration;
■ body geometry: 38 mm diameter 20 mm high plastic cylinder;
■ test speed 2.0 mm/s;
■ automatic trigger at 4 g force; and
■ sample temperature 7 °C.
In order to be able to neglect any boundary effects, it is preferred to use a cup size having a height of about 61 mm, and upper inner diameter of approximately 68 mm and a lower inner diameter of about 52 mm, the cup having a total contents of 175 ml.

In one embodiment of the invention the composite food product is a bilayer or multilayer food system. Preferably the bilayer or multilayer composite food product comprises at least one layer containing custard and/or pudding, and at least one layer in contact therewith containing fruit sauce and/or yoghurt.

In connection with the filling process the viscosity of the fruit sauce should be at least 25 TA units at 7 °C.

If the acidic food phase comprises fruit sauce, yoghurt or a fruit-flavoured yoghurt, it preferably contains real fruits or pieces thereof The fruit or pieces thereof can be of any fruit source. Apple, strawberry, banana, orange, cherry, raspberry, blueberry and peach are examples of a non-exhaustive list of fruits suitable for use in the acidic food phase. The acidic food phase may also comprise fruit-derived or fruit-related products, such as fruit compotes, or reconstituted fruit. Fruits can be applied in various forms, such as juice, mashed fruits, fruit pieces of complete fruits. The acidic food phase preferably comprises a fruit sauce. In the context of the invention, the term "fruit sauce" is understood to comprise aqueous fruit compositions containing (pieces of) fruit in water.

However, standard fruit sauce involves 40 - 60 wt% fruit in water, wherein the fruit is sometimes subjected to breaking, de-stoning, cutting, grating, sieving, pureeing, milling and/or mincing prior to mixing it with water. The sauce may be supplemented with ingredients from the non-exhaustive list of sugars, intensive sweeteners, thickening agents such as starch, pectin, alginate, xanthan gum, guar gum and/or locust bean gum, fibres, flavourants, colouring agents, preservatives (such as potassium sorbate) and other processing aids. To extend the shelf life the raw ingredients (fruits with or without additives) are conserved, mostly by freezing, drying or heating. Many fruit preparations are set on a specified pH, on average about 4.1, preferably by using citric acid, after which the obtained pumpable mixture is heated for preservation and filled in containers. A review of the fruit preparation process is for instance given in R. Valet "Zur Herstellung von Fruchtzubereitungen und deren Anwendung in Milchprodukten" Die Industrielle Obst- une Gemüseverwertung, vol. 67 (1982), 507 - 515, or in the Handbook "Fruit and vegetable processing: Improving quality", edited by W.M.F. Jongen (Woodhead Publishing in Food Science and Technology).

The titratable acidity of such a standard fruit-containing fruit sauce known in the art starts from about 65 °N, and the combination of such high titratable acidity with low pH thus makes it unsuitable for use according to the present invention. Likewise, in the art a fresh, mild 3%-fat yoghurt is commonly prepared having a pH of about 4.2 and a titratable acidity of about 115 °N. A fresh plain low-fat yoghurt has e.g. a pH of 4.23 and a TTA of even 142 °N. A moderate heat treatment, a so called thermisation (keeping the yoghurt a few seconds at about 65 °C) reduces the acidity. A thermised plain yoghurt typically has a pH of 4.09 and a TTA of 99 °N.

Therefore, the invention further pertains to an acidic foodstuff, preferably a fruit sauce or a yoghurt, or a combination thereof, most preferably a fruit sauce, treated to obtain the aformentioned characteristics, i.e. having a combination of pH and titratable acidity below the line TTA = 30 * pH - 55, preferably below the line TTA = 30 * pH - 70, and in which the pH is between 2.5 and 5, more preferably pH 3.5 - 4.6. The acidic foodstuff, suitable for incorporation as the acidic food phase in the composite food product, may have one or more other features mentioned above, in relation with the non-acidic dairy phase in a composite food product.

The acidic foodstuff may be acidified during and/or after preparation, but at least prior to bringing it into contact with a non-acidic dairy phase. With "acidification" it is meant establishing a pH decrease in the foodstuff. The pH decrease may preferably be achieved by adding a food-grade acid to the acidic foodstuff at any point during or after its preparation. However, in adjusting the pH, care must be taken that the acid addition contributes to both pH as well as titratable acidity. Therefore, the food-grade acid preferably has a dissociation constant higher than 1·10⁻⁴, for instance lactic acid, malic acid or citric acid. More preferably, the food-grade acid is a strong acid, for instance HCl. Both pH and titratable acidity are decreased this way.

In case the acidic foodstuff comprises a fruit sauce, it is possible to select fruit types or races which contain less (strong) acids by nature, such as apple. More preferably, the amount of fruit present in the fruit sauce is adjusted during preparation. For example, where a standard cherry or apple sauce comprises about 40 - 60 wt% fruit, a cherry or apple sauce in accordance with the invention comprises at most about 10 wt% cherry or 25 wt% apple, respectively. Higher amounts would result in a too high titratable acidity. In order to obtain a fruit sauce of similar appearance as the untreated fruit sauce, the skilled person should adjust the amounts of thickeners and/or flavouring agents in the composition.

The skilled person may also select other methods and/or means to achieve acidification, such acidification methods and/or means known in the art, depending on the acidic foodstuff of choice. If the acidic foodstuff comprises a yoghurt, the skilled person may select the fermentation conditions, starting materials and/or culture during the yoghurt preparation, to obtain a yoghurt having a lower acidity. This may for instance be achieved by diluting a thermised plain yoghurt with water in a ratio 1:1, yielding a yoghurt having a pH 4.12 and a TTA of 49 °N, within the range of the invention. Another possibility is to use acidified milk as an ingredient of the acidic food phase, which milk has been acidified chemically, for instance by using glucono-δ-lactone (GDL), known in the art, to reduce TTA below the line, preferably below 50 °N, more preferably below 40 °N.

The skilled person may also choose a deacidifation means as mentioned in US 6,761,915, wherein the term "deacidification" applies to lowering of the titratable acidity. If deacidifcation means a lowering of titratable acidity, it is considered to be equivalent to the aforementioned acidification, provided that the resulting combination of pH and titratable acidity is in accordance with the present invention. A preferred deacification means mentioned in US 6,761,915 utilises ion equipment and procedures. However, any other suitable deacidification approach may likewise be practiced provided the selected technology achieves the desired titratable acidity level and pH.

The invention also pertains to the preparation of the above-described composite food products, wherein an acidic food phase and a non-acidic dairy phase are brought into contact with one another. The non-acidic dairy phase and the acidic phase are introduced into a container a) simultaneously, for instance by using separate supply lines; b) one after another, to form a bilayer or multilayer system; or c) after a premixing step to form a dispersion of one phase in the other phase.

### EXAMPLE

Several composite dessert products were prepared in which different neutral dairy recipes were combined with different fruit sauces.

The fruit sauces varied in fruit type and content. In preparation these fruit sauces were at some point acidified with various acids to different final pH values. The acidity of each fruit sauce was determined by titrating 100 ml sample with 0.1M NaOH, using phenolphtaleïn as the indicator. The values for pH and acidity for each fruit sauce are shown in table 1. Therein, the titratable acidity is the volume of NaOH needed to reach the end point (pH 8.4).

Then the fruit sauce was combined with a neutral dairy recipe to a composite dessert product. Thereto, a 112 mm cup was filled with approximately 650 ml product (custard, Campina, the Netherlands) or semolina, the surface was flattened and 100 g fruits sauce was filled on top of the dairy product.

In a number of cases the effect of the type of acidifier and the final pH was studied by using a model fruit sauce, which was prepared from the following components (and weight amounts thereof):
- 21 % sucrose;
- 4% glucose;
- 4% fructose;
- 1.5% National 2600 (National Starch & Chemical Company6, Bridgewater, NJ, USA); and
- 0.6% Grindsted Pectin LA415 (Danisco, CopenHagen, Denmark), based on the total weight of the fruit sauce, the remainder being water.

After storage during 7 days at 7 °C the composite dessert product was evaluated sensorically on a scale from 1 to 5 on texture of the interfacial layer (1 = highly gelled; 5 = no sign of gelation/thickening).

Apart from the sensoric rating, the gelation or thickening at the interface between the layers was determined by measuring the force F and calculating the peak ratio as indicated in the description.

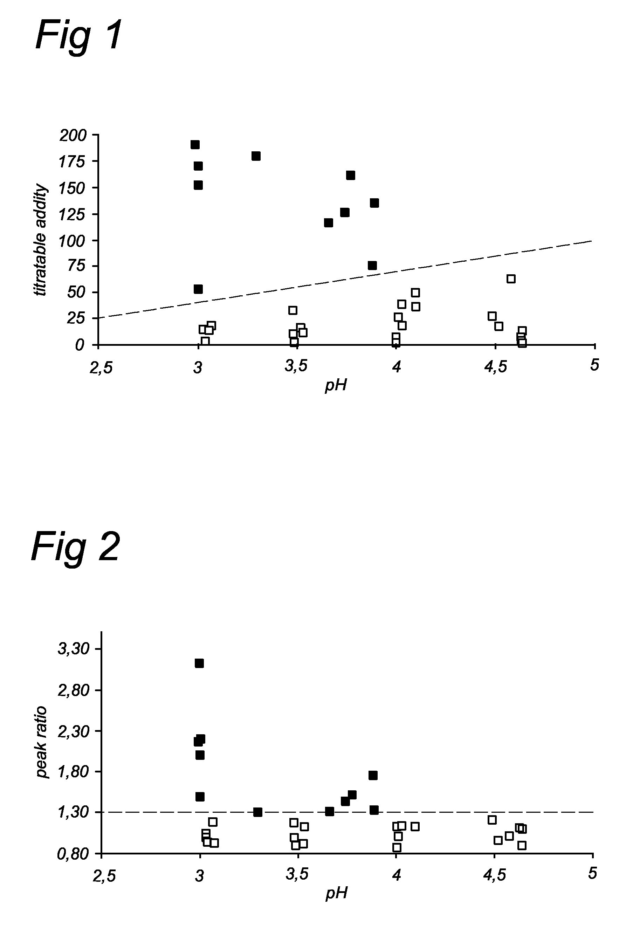

The results from the sensory test, titratable acidity, pH and peak ratios are reported in table 1. In Figure 1 the combination of pH and titratable acidity is plotted for the various composite dessert products, while in figure 2 the combination of peak ratio and pH is plotted. Therein, those products having a sensory score of 4 or higher are characterised by open symbols, and those having a lower score with closed symbols.

**Table 1- Composite dairy products with commercial or model fruit sauces; the effect of acidity and pH of the fruit sauce on sensory score and peak ratio of the composite product**

| **Fruit sauce** | **Fruit %** | **pH** | **pH adjusted with** | **Acidity (°N)** | **Peak ratio** | **Sens. score** | **Evaluation** |
|---|---|---|---|---|---|---|---|
| **EFFECT OF COMMERCIAL FRUIT SAUCES** | | | | | | | |
| **Reference Milchreis (semolina) - no fruit sauce** | | | | | 1.00 | 5 | Good |
| Zentis Cherry sauce 641643, adapted A | 10 | 4.10 | citric acid | 49.5 | 1.12 | 4 | Good |
| Zentis Cherry sauce 641643, adapted B | 10 | 4.10 | HCl | 36.3 | 1.12 | 4 | Good |
| Zentis Cherry sauce 640834, adapted | 50 | 3.29 | citric acid | 179.1 | 1.31 | 2 | Poor |
| **Reference Vanilla vIa - no fruit sauce** | | | | | 1.00 | 5 | Good |
| Zentis Strawberry sauce 9817, adapted | 50 | 3.89 | citric acid | 134.9 | 1.32 | 3 | Poor |
| Zentis Strawberry sauce 642142, adapted | 10 | 4.03 | citric acid | 38.6 | 1.14 | 4 | Good |
| Carels Strawberry-Raspberry sauce 23380/29, | | | | | | | |
| adapted | 35 | 3.77 | citric acid | 161.3 | 1.51 | 2 | Poor |
| Zentis Apfelstrudel preparation 639689, adapted | 25 | 4.49 | citric acid | 26.8 | 1.20 | 4 | Good |
| Frutarom Apple preparation 86.81.1837, adapted | 56 | 3.74 | citric acid | 126.2 | 1.42 | 2 | Poor |
| Zentis Peach sauce 640270A, adapted | 50 | 3.66 | citric acid | 116.7 | 1.31 | 3 | Poor |
| | | | | | | | |

| **EFFECT OF ACIDIFIER TYPE** | | | | | | | |
|---|---|---|---|---|---|---|---|
| **Reference vanilla vla - no fruit sauce** | | | | | 1.00 | 5 | good |
| Model fruit sauce | 0 | 3.88 | acetic acid | 75.5 | 1.75 | 2 | poor |
| Model fruit sauce | 0 | 3.00 | HCl | 53.1 | 1.49 | 3 | poor |
| Model fruit sauce | 0 | 3.00 | citric acid | 170.3 | 2.00 | 2 | poor |
| Model fruit sauce | 0 | 3.00 | lactic acid | 151.7 | 2.20 | 2 | poor |
| Model fruit sauce | 0 | 3.00 | acetic acid | 1051.6 | 3.11 | 1 | poor |
| Model fruit sauce | 0 | 2.99 | malic acid | 190.3 | 2.16 | 2 | poor |

| **EFFECT OF ACIDITY AND FINAL pH** | | | | | | | |
|---|---|---|---|---|---|---|---|
| **Reference Vanilla vla - no fruit sauce** | | | | | 1.00 | 5 | good |
| Model fruit sauce | 0 | 3.04 | HCl | 2.4 | 0.94 | 5 | good |
| Model fruit s. + Zentis Strawb. sauce 642142 (mix) | 5 | 3.07 | HCl | 17.9 | 0.92 | 5 | good |
| Model fruit sauce | 0 | 3.06 | HCl | 13.0 | 1.18 | 4 | good |
| Model fruit sauce | 0 | 3.03 | NaOH + HCl | 12.8 | 1.00 | 5 | good |
| Model fruit sauce | 0 | 3.03 | NaOH + HCl | 14.6 | 1.05 | 4 | good |
| Model fruit sauce | 0 | 3.49 | HCl | 1.5 | 0.88 | 5 | good |
| Model fruit s. + Zentis Strawb. sauce 642142 (mix) | 5 | 3.52 | HCl | 15.2 | 0.91 | 5 | good |
| Zentis Strawberry sauce 642142 | 10 | 3.48 | HCl | 32.2 | 0.99 | 5 | good |
| Model fruit sauce | 0 | 3.48 | - | 9.4 | 1.17 | 4 | good |
| Model fruit sauce | 0 | 3.53 | NaOH + HCl | 10.7 | 1.12 | 4 | good |
| Model fruit sauce | 0 | 4.00 | HCl | 1.3 | 0.86 | 5 | good |
| Zentis Strawberry sauce 642142 | 10 | 4.01 | NaOH | 25.0 | 1.00 | 5 | good |
| Model fruit sauce | 0 | 4.00 | NaOH | 6.1 | 1.13 | 4 | good |
| Model fruit sauce | 0 | 4.03 | NaOH + acetic ac. | 17.9 | 1.12 | 4 | good |
| Model fruit sauce | 0 | 4.64 | HCl | 0.8 | 0.87 | 5 | good |
| Zentis Strawberry sauce 642142 | 10 | 4.52 | NaOH | 17.1 | 0.95 | 5 | good |
| Model fruit sauce | 0 | 4.63 | NaOH | 3.3 | 1.10 | 4 | good |
| Model fruit sauce | 0 | 4.63 | NaOH + acetic ac. | 6.7 | 1.10 | 4 | good |
| Model fruit sauce | 0 | 4.64 | NaOH + acetic ac. | 12.4 | 1.09 | 5 | good |
| Zentis Peach sauce 640270B, adapted | 50 | 4.58 | NaOH | 62.4 | 1.00 | 5 | good |

## Claims

1. A composite food product comprising at least a non-acidic dairy phase and an acidic food phase in contact therewith, wherein said acidic food phase exhibits a combination of pH and titratable acidity (TTA) below the line TTA = 30 * pH - 55, in which the pH is between 2.5 and 5.

2. The composite food product according to claim 1, wherein said acidic food phase has a pH in the range of 3.7 - 4.6.

3. The composite food product according to claim 1 or 2, wherein said acidic food phase has a TTA of less than 50°N.

4. The composite food product according to any one of the preceding claims, wherein said acidic food phase is a pourable or spoonable phase having a viscosity of at least 25 TA ("Texture Analyser") units at 7 °C.

5. The composite food product according to any one of the preceding claims, being a composite dessert product.

6. The composite food product according to any one of the preceding claims, wherein said composite food product is a bilayer or multilayer system comprising at least a layer containing custard and/or pudding, and a layer in contact therewith containing fruit sauce and/or yoghurt.

7. The composite food product according to any one of the preceding claims, wherein said composite food product phase exhibits a maximum in normalised force or peak ratio of less than 1.3.

8. The composite food product according to any one of the preceding claims, wherein said acidic food phase comprises a sauce containing fruit or pieces thereof

9. An acidic foodstuff having a combination of pH and titratable acidity below the line TTA = 30 * pH - 55, in which the pH is between 2.5 and 5.

10. The acidic foodstuff according to claim 9, being a fruit sauce or a yoghurt, or a combination thereof

11. A method for preparing a composite food product according to any one of claims 1 - 8, wherein an acidic food phase and a non-acidic dairy phase are brought into contact with one another.
